(19) Europäisches Patentamt
European Patent Office
Office européen des brevets

(11) Publication number: 0 082 425
A2

# (12) EUROPEAN PATENT APPLICATION

(21) Application number: 82111412.1

(22) Date of filing: 09.12.82

(51) Int. Cl.$^3$: C 08 L 71/04
C 08 L 25/00, C 08 L 51/06

(30) Priority: 22.12.81 US 333324

(43) Date of publication of application:
29.06.83 Bulletin 83/26

(84) Designated Contracting States:
DE FR GB IT NL

(71) Applicant: GENERAL ELECTRIC COMPANY
1 River Road
Schenectady New York 12305(US)

(72) Inventor: Cooper, Glenn Dale
42 The Crossway
Delmar New York, 12054(US)

(74) Representative: Schüler, Horst, Dr. et al,
Kaiserstrasse 41
D-6000 Frankfurt/Main 1(DE)

**(54) Composition of PPE/PS-grafted EPDM where PPE/graft + PPE is 0.6 - 0.99 and swelling index of gel fraction is less than 20.**

(57) An improved thermoplastic composition comprising an admixture of polyphenylene ether resin and alkenyl aromatic resin is described. The ratio of polyphenylene ether to the total of the polyphenylene ether and alkenyl aromatic resin is from 0.6 to 0.99.

EP 0 082 425 A2

Croydon Printing Company Ltd.

## Background of the Invention

Thermoplastic compositions containing polyphenylene ether (or oxide) in admixture with alkenyl aromatic resins are well-known. Examples are, for example, described in U.S. Patent No. 3,383,435 of Eric P. Cizek, the disclosure of which is incorporated herein by reference. Such compositions are most generally employed in the production of molded and/or extruded articles.

Polyphenylene ethers are known and described in numerous publications including U.S. Patent Nos. 3,306,874 and 3,306,875 of Allan S. Hay and U.S. Patent Nos. 3,257,357 and 3,257,358 of Gelu Stoeff Stamatoff. The high molecular weight polymers are high performance engineering thermoplastics possessing relatively high melt viscosities and softening points - i.e., in excess of 275°C. - and are useful for many commercial applications requiring high temperature resistance including formation of film, fiber and molded articles.

For many uses, the high performance properties are not necessary and the relatively high melt viscosities and softening points are a disadvantage. For example, film and fiber can only be formed on a commercial scale from solution; melt processing being commercially unattractive because of the required high temperatures

needed to soften the polymer and the problems associated therewith such as instability, discoloration and the requirement for specially designed process equipment to operate at elevated temperatures. Molded articles can be formed by melt processing techniques, but again, the high temperatures required are undesirable.

Because of low cost and an overall combination of fair to good properties, alkenyl aromatic resins such as polystyrene have found wide and diversified commercial acceptance. However, such resins are usually brittle, possess a relatively low heat distortion temperature and have relatively poor resistance to the more common organic solvents. It is known in the art that various of these properties of alkenyl aromatics may be improved by copolymerizing with other monomers or by blending with other resins.

As is also described in the Cizek patent, modifiers such as butadiene may be incorporated into the alkenyl aromatic resins to improve the properties of resultant compositions. Such modified resins provide means for overcoming various physical drawbacks of alkenyl aromatic resins, particularly polystyrene, while simultaneously facilitating the processing of polyphenylene ethers.

Other such modifiers are also known. In, for example, U.S. Patent No. 3,658,945 of Nakashio et al., it is disclosed that alkenyl aromatic resins may be graft-modified onto ethylene-alpha-olefin-polyene terpolymer. They disclose that 0.5 to 15% of terpolymer by total composition weight, where the graft copolymer contains from 5 to 80% of styrene compound, is needed to enhance impact

strength at levels up to about 30% of styrene-EPDM graft copolymer by total composition weight.

Such graft copolymers are also described in U.S. Patent Nos. 3,943,191; 3,959,211; 3,974,235; 4,101,503; 4,101,504; 4,101,505; and 4,102,850 of Glenn D. Cooper et al. and elsewhere. In most instances, however, high polyphenylene ether content compositions have exhibited markedly inferior physical properties. Improved compositions in this range, and particularly ones additionally containing amounts of unmodified alkenyl aromatic resins, therefore remain highly desirable.

## Introduction to the Invention

The present invention relates to improved thermoplastic compositions comprising an admixture of polyphenylene ether and alkenyl aromatic resin, the ratio of polyphenylene ether to the total of the two being in the range 0.6 to 0.99. At least a portion of the alkenyl aromatic resin is grafted onto rubbery ethylene-alpha-olefin-polyene interpolymer and the gel fraction of the composition has a swelling index of less than about 20.0 and preferably in the range from about 5.0 to about 7.5.

## Description of the Invention

The polyphenylene oxide resins useful in accordance with the present kinds of compositions are, as previously indicated, individually well known and readily available. There are, however, various preferred composition components. These are primarily ones commonly having applications for which high impact strength is particularly desirable.

The preferred polyphenylene ethers are homo- and copolymers of the formula:

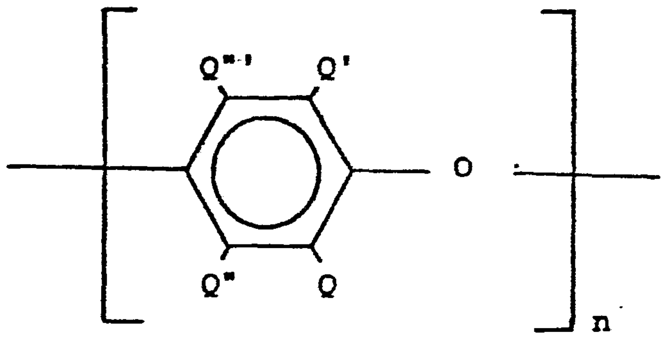

wherein Q, Q', Q" and Q"' are independently selected from the group consisting of hydrogen, hydrocarbon radicals, halohydrocarbon radicals having at least two carbon atoms between the halogen atom and the phenol nucleus, hydrocarbonoxy radicals and halohydrocarbonoxy radicals having at least two carbon atoms between the halogen atoms and the phenol nucleus, and Q', Q" and Q"' in addition may be halogen with the proviso that Q and Q' are preferably free of a tertiary carbon atom; and n represents the total number of monomer residues and is an integer of at least 50.

Especially preferred is poly(2,6-dimethyl-1, 4-phenylene)ether.

The alkenyl aromatic resins and/or grafted portions thereof are likewise well known and are preferably derived from monomers of the formula:

 

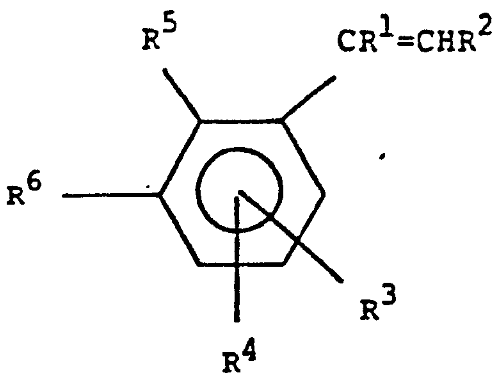

wherein $R^1$ and $R^2$ are selected from the group consisting of lower alkyl or alkenyl groups of from 1 to 6 carbon atoms and hydrogen. $R^3$ and $R^4$ are selected from the group consisting of chloro, bromo, hydrogen and lower alkyl of from 1 to 6 carbon atoms; $R^5$ and $R^6$ are selected from the group consisting of hydrogen and lower alkyl and alkenyl groups of from 1 to 6 carbon atoms or $R^5$ and $R^6$ may be concatenated together with hydrocarbyl groups to form a naphthyl group.

Specific examples of alkenyl aromatic monomers include styrene, chlorostyrene, alpha-methylstyrene, vinyl xylene, divinylbenzene and vinyl naphthalene. Styrene is particularly preferred.

The rubbery interpolymers utilized in formation of the present grafted copolymers are formed from ethylene, alpha-olefin and polyene monomers. Preferred alpha-olefins have from 3 to 10 carbon atoms. Preferred polyenes are nonconjugated (either cyclic or open-chain) dienes. They desirably have 5 to 20 carbon atoms. These interpolymers are desirably composed of from 10 to 90 mole percent ethylene, 10 to 90 mole percent alpha-olefin and 0.1 to 10 mole percent polyene.

Alkenyl aromatic resin may be grafted onto such an interpolymer by polymerizing alkenyl aromatic monomer in its presence. This may be accomplished by dissolving the interpolymer in monomer and then polymerizing the mixture in the presence of an initiator.

The interpolymer may be grafted with alkenyl aromatic in virtually any proportion. Desirably, however, the interpolymer (or rubbery portion of the grafted copolymer) comprises 10 to 70%, most preferably from about 40 to 60% by total weight of the graft copolymer. In addition, up to about 30, preferably about 5 to 30% by total resin weight of non-grafted alkenyl aromatic polymer such as homopolystyrene may be present in these compositions.

For the objects of the present invention, the composition should have a gel fraction swelling index of less than about 20.0 and for best results, preferably from 5.0 to 7.5. It has been discovered that outside this range the effect of the interpolymer reverses and such properties as composition impact strength deteriorate.

Selection of compositions having the foregoing property may be ensured by a simple test. A gram sample is stirred overnight in 25 ml toluene, transferred to a tared centrifuge tube and centrifuged for 70 minutes at 15,000 rpm. After decanting the toluene solution, the residue is resuspended in 25 ml of toluene for 24 hours and again centrifuged. After fully draining the toluene solution, the weight of remaining swollen gel is taken. This may be compared to the weight of the gel after drying in a vacuum oven to provide its swelling index -- viz. the ratio of swollen to dry gel weights.

If processing of the present composition will entail extrusion, molding or like mechanical treatment, the sample should have been similarly processed prior to testing. Such treatment may affect the swelling index of a composition.

In forming the present compositions, any proportions of resins are permitted. Desirably, however, the polyphenylene ether resin is present in a weight ratio to alkenyl aromatic resin of at least 1.5 and a ratio between 1.5 and 99 is particularly preferred. This ratio is predicated on the sum of the alkenyl aromatic grafted to interpolymer plus other non-grafted alkenyl aromatic resin, if any, in the composition. Alternatively stated, the ratio of polyphenylene ether to total polyphenylene ether and alkenyl aromatic resin should be at least 0.6, preferably from 0.6 to 0.99. In general, it is also desired that the grafted interpolymer contain up to 100%, desirably from 70 to 95%, of the total weight of alkenyl aromatic resin in the composition and/or and that its rubber (or interpolymer) portion comprise from 1 to 25% by total composition weight.

The compositions made according to the teachings of the present invention are preferably prepared first by fine admixture of their ingredients. This may, for example, be accomplished simply by coextrusion. A substantially homogeneous admixture is preferred.

Once prepared, the present compositions may be utilized for any of the diverse purposes for which similar polyphenylene ether/polyalkenyl aromatic resin compositions have already been employed. For example, they can be used in molding powder formulations, either alone or mixed with other polymers and may contain various fillers, such as wood flour, diatomaceous earth, carbon black, silica, etc. They are ordinarily used to prepare molded (by injection or compression) or extruded articles. These articles may take a broad spectrum of forms including sheets, rods, etc.

The present compositions may also be mixed with various fillers, modifying agents, etc. such as dyes, pigments, stabilizers, plasticizers, etc. All this may be performed in a conventional manner.

The following examples are given by way of illustration only and are not intended as a limitation on the scope of this invention. Many variations are possible without departing from its spirit and scope. Unless otherwise specified herein, all proportions are provided on a weight basis.

## EXAMPLES 1-30

Sample compositions are prepared by compounding poly(2,6-dimethyl-1,4-phenylene ether) with polystyrene grafted interpolymers of ethylene-propylene-5-ethylidene-2-norbornene and as required, polystyrene homopolymer. The proportions of these ingredients are varied for each sample to provide compositions comprising 3% rubbery interpolymer (exclusive of grafted polystyrene) by total composition weight and the below indicated polyphenylene ether to total composition weight ratios. Different grafted interpolymers, but all produced in accordance with the process described in U.S. Patent No. 4,101,503, were employed to produce sample compositions having variant gel fraction swelling indexes.

Admixture of the sample ingredients is performed by extrusion in either a 28 mm Werner-Pfleiderer twinscrew or single screw Brabender extruder at a 1:1 compression ratio. The resultant composition is then molded into standard test pieces in a screw injection molding machine and tested for impact strength and swelling indexes. The results are set forth in the Table below:

TABLE 1

| Example | Extruder | Polyphenylene ether /(Polystyrene + Polyphenylene ether) | Swelling Index | Izod Impact | Gardner Impact |
|---|---|---|---|---|---|
| 1 | single-screw | 0.618 | 11.2 | 2.3 | 150 |
| 2 | twin-screw | 0.618 | 7.6 | 3.4 | 100 |
| 3 | single-screw | 0.618 | 7.2 | 3.6 | 175 |
| 4 | single-screw | 0.722 | 17.2 | 2.0 | 25 |
| 5 | single-screw | 0.722 | 19.2 | 2.8 | 75 |
| 6 | single-screw | 0.722 | 14.9 | 3.0 | 100 |
| 7 | single-screw | 0.722 | 12.1 | 3.0 | 300 |
| 8 | single-screw | 0.722 | 8.0 | 3.3 | 125 |
| 9 | twin-screw | 0.722 | 7.1 | 3.8 | 225 |
| 10 | single-screw | 0.722 | 7.2 | 4.2 | 150 |
| 11 | twin-screw | 0.825 | 9.9 | 3.1 | 10 |
| 12 | single-screw | 0.825 | 15.0 | 3.3 | 100 |
| 13 | twin-screw | 0.825 | 8.3 | 3.4 | 165 |
| 14 | twin-screw | 0.825 | 8.3 | 3.5 | 150 |
| 15 | single-screw | 0.825 | 7.2 | 5.1 | 300 |
| 16 | single-screw | 0.825 | 7.4 | 5.3 | 300 |
| 17 | twin-screw | 0.905 | 19.5 | 1.5 | 10 |
| 18 | single-screw | 0.905 | 14.1 | 4.0 | 225 |
| 19 | single-screw | 0.905 | 9.1 | 4.8 | 325 |
| 20 | single-screw | 0.905 | 7.0 | 6.2 | 300 |
| 21 | single-screw | 0.969 | 15.0 | 3.9 | 300 |
| 22 | twin-screw | 0.969 | 10.5 | 4.0 | 25 |
| 23 | single-screw | 0.969 | 5.7 | 7.1 | 300 |

TABLE 1 (contd.)

| Example | Extruder | Polyphenylene ether/ (Polystyrene + Polyphenylene ether) | Swelling Index | Izod Impact | Gardner Impact |
|---|---|---|---|---|---|
| 24* | | 0.000 | 18.5 | 2.3 | |
| 25* | | 0.000 | 18.0 | 1.8 | |
| 26* | | 0.000 | 13.6 | 1.1 | |
| 27* | | 0.000 | 17.9 | 2.8 | |
| 28* | | 0.000 | 7.5 | 1.0 | |
| 29* | | 0.208 | 14.8 | 4.8 | 150 |
| 30* | | 0.208 | 9.0 | 3.2 | 50 |

* comparison experiment, polyphenylene ether/(polystyrene + polyphenylene ether) ratio outside the range 0.6 to 0.99

Izod Impact in units of ft.lbs./in. of notch

Gardner Impact in units of in.lbs.

As shown by the Table, within the polyphenylene ether/(polystyrene + polyphenylene ether) composition ratio of 0.6 to 0.99, impact strength increases substantially especially for compositions in which the gel fraction swelling index is below 7.5. Outside the present composition ratio there is a reversal in the direction of change in physical properties from the desired result shown; impact strengths there deteriorate as swelling index approaches the present desired range.

No explanation for the above phenomenon is known. All that is clear is that within the parameters of the present invention, a different set of forces must apply. Moreover, these forces result in an unexpected enhancement of the physical properties of the present thermoplastic compositions.

The above mentioned patents and/or publications are incorporated herein by reference. Obviously, other modifications and variations of the present invention are possible in light of the above teachings. For example, instead of poly(2,6-dimethyl-1,4-phenylene)ether there can be substituted poly(2,6-dimethyl-co-2,3,6-trimethyl-1,4-phenylene)ether copolymer. In addition, conventional reinforcements and/or fillers, flame retardants, stabilizers, colorants, impact modifiers can be used in conventional amounts. It is therefore to be understood that changes may be made in the particular embodiments of the invention described which are within the full intended scope of the invention as defined by the appended claims.

CLAIMS:

1. A thermoplastic composition comprising an admixture of polyphenylene ether resin and alkenyl aromatic resin, at least a portion of said alkenyl aromatic resin being grafted onto rubbery ethylene-alpha olefin-polyene interpolymer, wherein the ratio of polyphenylene ether to total polyphenylene ether and alkenyl aromatic resin is from 0.6 to 0.99 and the gel fraction of said composition has a swelling index of less than about 20.0.

2. The composition of Claim 1, wherein the rubbery portion of the grafted interpolymer comprises from 1 to 25% by total composition weight.

3. The composition of Claim 1, wherein the polyalkenyl aromatic resin comprises polystyrene.

4. The composition of Claim 1, wherein the composition has a swelling index of from about 5.0 to about 7.5.

5. The composition of Claim 1, wherein the polyene of the interpolymer comprises cyclopentadiene or ethylidene norbornene.

6. The composition of Claim 1, wherein the interpolymer comprises from about 10 to 90% ethylene, about 10 to 90 alpha-olefin and about 0.1 to 10% polyene by mole.

7. The composition of Claim 6, wherein the interpolymer comprises from 40 to 60% by weight of the grafted copolymer resin.

8. The composition of Claim 1, wherein homopolyalkenyl aromatic resin is additionally present.